# EUROPEAN PATENT SPECIFICATION

(11) **EP 0 300 948 B1**
(45) Date of publication and mention of the grant of the patent: **09.06.1993**
(21) Application number: 88500073.7
(22) Date of filing: 22.07.1988
(51) Int. Cl.: A23L 1/162, A23L 1/182, A23L 1/325

(54) **Procedure for the preparation of pre-cooked paella**
Verfahren für die Zubereitung einer vorgekochten Paella
Procédé pour la préparation d'une paella précuite

(30) Priority: 23.07.1987 ES 8702155
(43) Date of publication of application: 25.01.1989
(73) Proprietor: Segura Castano, Juan, E-08600 Berga (Barcelona) (ES)
(72) Inventor: Segura Castano, Juan, E-08600 Berga (Barcelona) (ES)
(74) Representative: Pons Arino, Angel

(56) References cited:
- March, Lourdes "El libro de la paella y de los arroces", Alianza Editorial, "El libro de bolsillo"
- Ortega, Simone "1080 recetas de cocina", Alianza Editorial, "El libro de bolsillo"
- Colectivo, "Manual de cocina", 27th Edition, C.E.G.A.L.

## Description

This invention is about a process for the packaging of the pre-cooked paella, meant to be packed fo its sale in such a state that its final consumption can be done through a simple elaboration process which does not require any background or whatsoever cooking skills.

For the preparation of paelleas there are already on the market some products including certain components, such as seafood, greens, etc., in natural and frozen state, with which a certain amount of rations can be prepared. However, until now, there is no product including all the components, the required sauce and rice included.

The aim of this invention is to develop a process allowing the preparation of the pre-cooked paellas, including all the precise ingredients and components.

Another aim of this invention is to develop a process for the aforesaid aim, through which certain components (e. g. sauce, rice, seafood, and others) are in a pre-cooked stage which allows that at the consumption moment, it will be enough to submit the product to a simple cooking stage, adding water.

The invention procedure includes the stages of a) preparation of a sauce including the different seasonings for the paella, b) mixing of this sauce with rice in the adequate amount, c) cooking of the rice and sauce mixed until getting all the sauce absorbed by the rice and d) packing of the resulting product through vacuum or deep freezing adding components of greens, meats, fishes, seafood, selected according to the flavour the paella should have.

The preparation of the sauce is to be done on soft fire with ground tomato, vegetable oil, smashed onion, table salt ground garlic, sweet coloured paprika, sugar, ground black pepper and an assortment of natural saffron, parsley, ground garlic, almond, hazelnuts and pine nuts. Those components are to be mixed, parboiled and fried until obtaning an almost thick sauce, adding, if necessary, some vegetable oil in case the sauce was prepared without the necesary amount, The sauce and rice, well mixed, are submitted to cooking in a container at high temperature, preferably between 50 and 260°, until getting all the sauce and added oil to be adsorbed by the rice in a single body, being the rice the carrier of sauce and oil. During the mixing of the different products and its cooking, the elaboration of the rice is carried out until arriving to a refrying stage, the rice grains disentangled the ones from the others.

The aim of the preceeding stage is getting the rice grains to be the carriers of the sauce with its flavour. In the same time, the rice gets a conservation stage due to the absorbed oil.

To get different flavours in the process of the pre-cooked rice, once all the aforesaid stages carried out and before the product is withdrawn from the container it has been cooked in, and keeping it still at high temperature, different flavour dehydratated items can be added, such as meat dehydrates, seafood or fish dehydrates, greens dehydrates and saffron-based colouring agents.

In case the paella is meant to have no special flavour, it won't be precise to add any dehydratated fish if the paella has to have fish or seafood flavour, it will be added dehydrated fish or seafood. If the paella has to have greens and vegetables flavour, the greens and vegetables dehydrated has to be added. Combining those dehydrates it can be reached flavours of two or more ingredients. Varying the rate of the dehydrates added it can be reached a prepared product of more or less strong flavours.

After cooling the product prepared in the aforesaid way, it can be packed in rations, adding greens in natural state, refried meats and/or refried seafood and fresh crustaceans, depending on the dehydrates added before.

During the packaging it can be added more natural coloured red pepper and natural peas. if the paella was prepared with fish or seafood flavour, this should be added during the packaging, let alone the natural coloured red pepper and the natural peas, refried mollusk such as squid, clam, baby-clam, and fresh crustaceans such as shrimps, prawns, Norway lobsters and crabs.

If the pre-cooked paella has a flavour of meats, during the packaging it will be added natural red coloured pepper and natural peas, meats in refried stage, such as rabbit, chicken, etc. If the paella has to have a green flavour, during the packaging it can be added natural greens such as coloured pepper, peas, artichokes, eggplants, beans, etc., and meats in refried state such as rabbit, chicken, etc.

As for the dehydrates, also the produts added during the packaging can be mixed to coincide and obtaining the desired flavours.

Once the rice prepared introduced into its container as said and added the products mentioned above, you can proceed to its closing through a vacuum process or a deep freezing system.

When the rice prepared as said is to be consumed, the rice is poured into a container and exposed to low fire, adding, one it reaches a certain temperature, hot water, preferably in boiling stage. When it begins to boil are added the different products packed together with the rice, such as greens, meats, seafood, etc., so that they end up their cooking at the same time, being the paella ready to be consumed, an not requiring to receive any other product or additive.

The base of the invention lies on the fact that the pre-cooked rice is the carrier of the necessary sauce and oil, with the required colour and taste and on the fact that the rice remains also in a refried state and conservation due to the absortion of all the products.

## Claims

1. Process for the preparation of pre-cooked paella which includes the stages of: a) preparation of a sauce on low fire, based on smashed tomato, smashed onion, vegetal oil, table salt, smashed garlic, sweet coloured paprika, sugar, ground blank pepper and an assortment of saffron, parsley, smashed garlic, almond, hazelnut and pine nuts,until obtaining quite a thick sauce: b) mixing said thick sauce with rice in an adequate proportion for the prepared sauce; c) submitting the products, once mixed, to an elaboration process until all the sauce is absorbed by the rice in a single body and the rice arrives at a refrying stage at which the rice grains being disentangled adding, finally, whe the product is still warm, saffron-based colouring agents, in the desired rate and a meat and/or seafood dehydrates and fish and greens, according to the flavour to be obtained; d) proceed to the packaging of the resulting product, through vacuum or deep freezing, adding greens in natural state, refried meats and/or refried mollusk and fresh crustaceans depending on the dehydratated added on the previous stage.

2. process, according claim 1, defined by the fact that the sauce includes for each kilogram, between 340 and 730 g. of smashed tomato, 1 between 150 and 300 g. of smashed onion, between 50 and 150 g.of vegetable oil, between 10 and 40 g. of fine salt, between 10 and 30 g. of smashed garlic, sweet red paprika, between 10 and 40 g., sugar, between 10 and 40 g.,

3. Process, according to claim 1, defined by the fact that for each kilogram of product to be prepared, there are to be mixed 450 and 700 g. of rice with 250 to 450 g. of sauce, adding between 25 and 50 g. of dehydrated food and between 25 and 50 g. of vegetable oil.

## Patentansprüche

1. Verfahren der Zubereitung von Fertig-Paellas, bestehend aus den Arbeitsgängen a) Zubereitung einer Sauce auf kleiner Flamme, auf der Basis von gehackter Tomate, gehackter Zwiebel, Pflanzenöl, Tafelsalz, gehacktem Knoblauch, süßem Paprikapulver, Zucker, gemahlenem schwarzem Pfeffer und einer Mischung aus Safran, Petersilie, gehacktem Knoblauch, Mandeln, Haselnüssen und Pinienkernen, bis eine recht dicke Sauce entsteht; b) Mischung der genannten dicken Sauce mit Reis in einem auf die Saucenmenge abgestimmten Verhältnis; c) Verarbeitung dieser Mischung auf dem Feuer bis die Sauce völlig vom Reis aufgesogen ist und der Reis infolgedessen einem nachträglichen Bratvorgang unterworfen wird, so daß die Reiskörner voneinander gelöst werden und ein lockerer, körniger Reis entsteht, sowie abschließend, bei noch warmem Halbprodukt, Zugabe der safranunterlegten Farbstoffe in der gewünschten Menge, von Trockenfisch oder Trockenfleisch und Fisch und Gemüse; d) Verpackung des fertigen Produkts im Vakumm oder gefriergetrocknet unter Beigabe von rohem Gemüse, durchgebratenem Fleisch oder Weichtieren und frischen Krebsen, je nach zuvor verarbeitetem Trockenprodukt.

2. Verfahren nach Anspruch 1 unter Berücksichtigung der Tatsache, daß die Sauce pro Kilogramm Gewicht der Paella zwischen 340 und 730g gehackte Tomate, 150 bis 300g gehackte Zwiebel, 50 bis 150g Pflanzenöl, 10 bis 40g Feinsalz, 10 bis 30g gehackten Knoblauch, 10 bis 40g süßes Paprikapulver und 10 bis 40g Zucker enthalten soll.

3. Verfahren nach Anspruch 1 unter Berücksichtigung der Tatsache, daß für ein Kilogramm Paella 450 bis 700g Reis mit 250 bis 450g Sauce zu mischen und 25 bis 50g Trockenprodukt, sowie 25 bis 50g Pflanzenöl beizugeben sind.

## Revendications

1. Procédé pour l'élaboration de la paëlla précuisinée, caractérisé en ce qu'il comprend les étapes de: a) préparation d'une sauce à petit feu à base de tomate broyé, d'oignon broyé, d'huile végétale, de sel de cuisine, d'ail broyé, de piment rouge doux, de sucre, de poivre noir moulu et d'un hachis de safran brut, de persil, d'ail broyé, d'amande, de noisette et de pignon, jusqu'à l'obtention d'une sauce à demi épaisse; b) la sauce ainsi préparée est mélangée à du riz dans la proportion adéquate; c) une fois les produits mélangés, il faut les soumettre à un procesus d'élaboration jusqu'à ce que toute la sauce ait été absorbée par le riz, formant un corps et le riz restant frit, sans que les grains de riz ne prennent, en ajoutant, enfin, le produit toujours chaud, des colorants à base de safran, dans la proportion désirée, et des deshydratés de viande et/ou des fruits de mer, du poisson et des légumes verts, cela ne dépendant que du goût que l'on voudra obtenir; d) procéder à la mise en conserve du produit résultant, sous vide ou par surgélation, avec l'addition de viandes refrites et/ou de mollusques et de crustacés frais, cela ne dépendant que du ou des produits déshydratés ajoutés à l'étape précédente.

2. Procédé, conformément à la revendication 1, caractérisé en ce que sa sauce comprend, pour chaque kilo, de 340 à 730 gr. de tomate broyé, de 150 à 300 gr. d'oignon broyé, de 50 à 150 gr. d'huile végétale, de 10 à 40 gr. de sel de cuisine, de 10 à 30 gr. d'ail broyé, de 10 à 40 gr. de piment rouge doux, de 10 à 40 gr. de sucre.

3. Procédé, d'après la revendication 1, caractérisé en ce que l'on mélange entre 450 et 700 gr. de riz avec 250 à 450 gr. de sauce sur chaque kilo de produit à préparer, en additionnant de 25 à 50 gr. de déshydratés et de 25 à 50 gr. d'huile végétale.
